# EUROPEAN PATENT APPLICATION

(11) **EP 2 725 787 A2**
(43) Date of publication of application: **30.04.2014**
(21) Application number: 12802172.2
(22) Date of filing: 21.06.2012
(51) Int. Cl.: H04N 7/015, H04N 5/91

(54) **METHOD FOR PROCESSING MEMORY SHARING-BASED DVB-T2/S2/C2 PIPING FORMAT BROADCASTING SIGNAL AND COMPUTER-READABLE RECORDING MEDIUM RECORDING PIPING FORMAT BROADCASTING SIGNAL FOR SAME**

(30) Priority: 21.06.2011 KR 20110060027
(71) Applicant: Kaonmedia Co., Ltd., Gyeonggi-do 463-839 (KR); Hanshin University Industry and Academia Cooperation Foundation, Osan-si, Gyeonggi-do 440-270 (KR)
(72) Inventor: KANG, Min-Gu, Yongin-si Gyeonggi-do 448-739 (KR); KIM, Chul-Min, Yongin-si Gyeonggi-do 446-908 (KR); WOO, Yong-Je, Seoul 143-917 (KR)
(74) Representative: Hoefer & Partner
(86) International application number: PCT/KR2012/004913
(87) International publication number: WO 2012/177062

(57) **Abstract**

The present invention relates to a technology based on memory sharing technique for processing piping format broadcast signal. More specifically, the present invention relates to a technology for a digital broadcast receiver (e.g., set-top boxes) to efficiently process DVB-T2/S2/C2 piping format broadcast signal which is a next-generation European digital television standard with lowering system load of the receiver by memory sharing technique. In the present invention, it is identified in view of transmission media between File mode of reading data files and Ethernet mode of playing broadcast stream in a real-time manner through Ethernet. Further, Normal Mode (NM) or High-Efficiency Mode (HEM) is identified in view of data field format. The present invention may be implemented in a form of application software on a general purpose operating system (OS).

## Description

### FIELD OF THE INVENTION

The present invention relates to a technology based on memory sharing technique for processing piping format broadcast signal which is adopted in DVB-T2 (Digital Video Broadcasting - The 2nd Generation Terrestrial), S2 (The 2nd Generation Satellite) and C2 (The 2nd Generation Cable) standards.

More specifically, the present invention relates to a technology for a digital broadcast receiver (e.g., set-top boxes) to efficiently process DVB-T2/S2/C2 piping format broadcast signal which is a next-generation European digital television standard with lowering system load of the receiver by memory sharing technique. In the present invention, it is identified in view of the transmission media between File mode of reading data files and Ethernet mode of playing broadcast stream in a real-time manner through Ethernet. Further, Normal Mode (NM) or High-Efficiency Mode (HEM) is identified in view of data field format. The present invention may be implemented in a form of application software on a general purpose operating system (OS).

### BACKGROUND ART

DVB (Digital Video Broadcasting), which is an European digital broadcasting technology, transmits broadcast data by multi-carrier modulation, i.e., OFDM (Orthogonal Frequency Division Multiplexing). The DVB technology includes DVB-T (Terrestrial), DVB-S (Satellite) and DVB-C (Cable), and defines technical specifications which are optimized for each transmission medium.

Many improvements have been done in DVB broadcasting, which are collectively called DVB 2G (DVB 2nd Generation) so as to distinguish it from the conventionary DVB (i.e., DVB 1G). The DVB 2G includes DVB-T2 (Terrestrial), DVB-S2 (Satellite) and DVB-C2 (Cable) for transmission media. The DVB 2G is technically advantageous in that transmission efficiency is 30% higher than that of the DVB 1G. Further, the DVB 2G is commercially advantageous in that conventionary broadcasting infra and receiver antennas can be used without any change. Due to the advantages, some of European states are currently running experimental broadcasts.

In DVB 2G, although conventionary antenna may be used without change, receivers (e.g., set-top boxes) shall be modified according to the DVB-T2/S2/C2 standards. Because many features have changed in DVB-T2/S2/C2 standards from DVB 1G, a new platform shall be prepared which is optimized for the new standards. Preferably, a common platform is better than individual ones for terrestrial, satellite and cable.

Further, there have been developed set-top boxes with general purpose OS (e.g., Android, Windows). In these receivers, the process for handling broadcast signal is only an application software which is executing on the general purpose OS. However, conventionary digital broadcast receivers are adequate for embedded platform, which renders the receivers inadequate for platforms of general purpose OS.

Specifically, conventionary receivers are disadvantageous with general purpose OS because other softwares are seriously interrupted and dedicated memory or excessive system memory is required for processing broadcast data. Therefore, digital broadcast receivers which are optimized for the general purpose OS shall be developed.

### DISCLOSURE OF INVENTION

### TECHNICAL PROBLEM

The purpose of the present invention is to provide a technology based on memory sharing technique for processing piping format broadcast signal which is adopted in DVB-T2/S2/C2 standards.

More specifically, the purpose of the present invention is to provide a technology for a digital broadcast receiver (e.g., set-top boxes) to efficiently process DVB-T2/S2/C2 piping format broadcast signal which is a next-generation European digital television standard with lowering system load of the receiver by memory sharing technique, in which it is identified in view of transmission media between File mode of reading data files and Ethernet mode of playing broadcast stream in a real-time manner through Ethernet, and then Normal Mode (NM) or High-Efficiency Mode (HEM) is identified in view of data field format. The present invention may be implemented in a form of application software on a general purpose OS.

### TECHNICAL SOLUTION

The present invention is directed to a method of processing DVB-T2/S2/C2 piping format broadcast signal with memory sharing for use in a digital broadcast receiver which processes broadcast stream in DVB-T2/S2/C2 piping format, comprising steps of: (A) identifying File mode or Ethernet mode so as to open an input port correspondingly; (B) allocating shared memory from system memory for use in processing broadcast stream to be provided through the input port; (C) receiving broadcast stream through the input port so as to store the broadcast stream in the shared memory in order of receiving; (D) performing DVB-piping to the broadcast stream so as to gather MPEG2-TS packet stream out of baseband frames; (E) creating and parsing T2-MI for the MPEG2-TS packet stream; (F) parsing headers of the baseband frames so as to identify stream transport mode as either Normal Mode (NM) or High-Efficiency Mode (HEM); (G) extracting actual contents data out of the MPEG2-TS packet stream corresponding to the stream transport mode; (H) storing the actual contents data in the shared memory in order of extraction; and (I) representing a broadcast program by MPEG2-TS decoding the actual contents data in the shared memory.

In the broadcast signal processing method according to the present invention, the step (B) is performed when the digital broadcast receiver does power-on cold booting, and the shared memory allocated in the step (B) stores the broadcast stream of the baseband frames received in the step (C), the MPEG2-TS packet stream gathered in the step (D), and the actual contents data extracted in the step (G).

In the broadcast signal processing method according to the present invention, in case of Normal Mode for the stream transport mode identified in the step (F), the step (G) comprises steps of: configuring synchronization for the gathered MPEG2-TS packet stream; determining by DNP field in the MPEG2-TS packet stream whether NULL packet deletion is adopted for the MPEG2-TS packet stream; performing NULL packet re-insertion for the MPEG2-TS packet stream if the NULL packet deletion is adopted; performing CRC-8 decoding for the MPEG2-TS packet stream; and performing SyncByte re-insertion for the MPEG2-TS packet stream.

In the broadcast signal processing method according to the present invention, the step (A) comprises steps of: identifying File mode if the digital broadcast receiver uses MPEG2-TS broadcast stream channels for broadcast receiving; and identifying Ethernet mode if the digital broadcast receiver uses DVB-GSE channels for broadcast receiving.

Further, the computer-readable recording medium according to the present invention stores piping format broadcast signal processing program of executing the method of processing DVB-T2/S2/C2 piping format broadcast signal with memory sharing as above.

### ADVANTAGEOUS EFFECTS

According to the present invention, in processing DVB-T2/S2/C2 broadcast signal which is a next-generation European digital television standard, broadcast signal may be efficiently processed with identifying File mode or Ethernet mode in a pre-processing stage irrespective of technical standards or transmission media (i.e., distribution network). Specifically, according to the present invention, system load of the receiver may be lowered by memory sharing technique, and the efficient data processing may be implemented in a form of application software on a general purpose OS.

### BRIEF DESCRIPTION OF THE DRAWINGS

FIG. 1 shows overall structure of DVB-T2 system.
FIG. 2 is a flowchart which shows data processing routine in a DVB-T2 receiver according to the present invention.
FIG. 3 is a flowchart which generally shows parsing routine of baseband frame according to the present invention.
FIGS. 4 and 5 are flowcharts which generally show operations of a DVB-T2 receiver according to the present invention.
FIG. 6 shows field format of baseband frame in DVB-T2.
FIG. 7 generally shows DVB-T2 modulator interface (T2-MI).
FIG. 8 shows a baseband frame in Normal Mode.
FIG. 9 shows a baseband frame in High-Efficiency Mode.

### EMBODIMENT FOR CARRYING OUT THE INVENTION

The present invention will be described below in detail with reference to the drawings.

First, PLPs (Physical Layer Pipes) is adopted for transmission scheme of audio, video and data is in the present invention so that both or either of conventionary MPEG2-TS broadcast stream or DVB-GSE IP network may be used for the transmission. The present invention is directed to designing European digital broadcasting system based on general purpose OS (e.g., Windows, Android, iOS), by which audio/video contents is represented by analyzing DVB-T2 stream in a digital broadcast receiver (e.g., set-top box) so as to obtain L1 signal which contains construction information, and then by analyzing baseband frame which contains actual broadcast program contents.

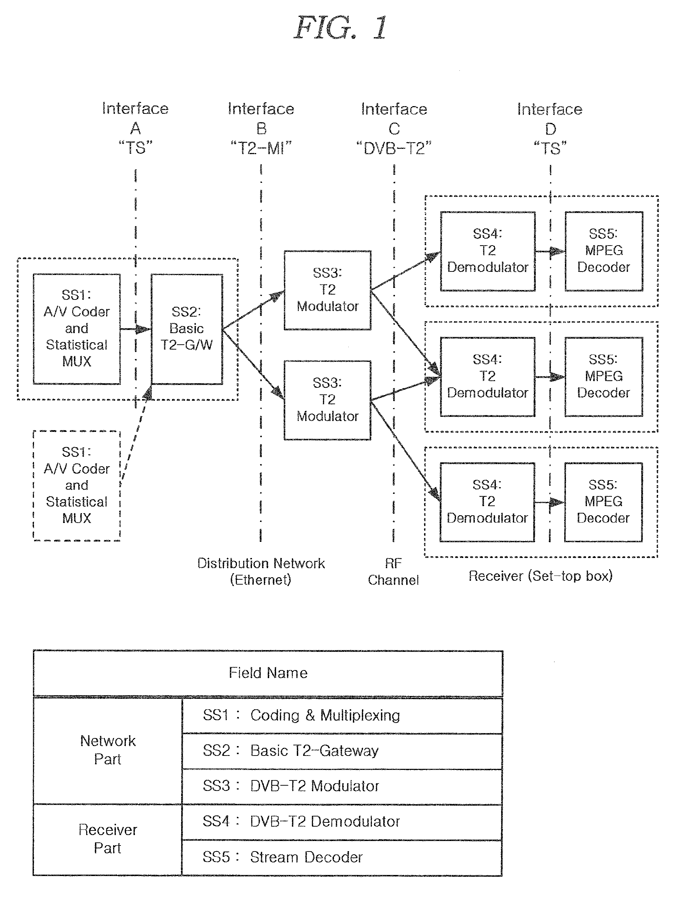

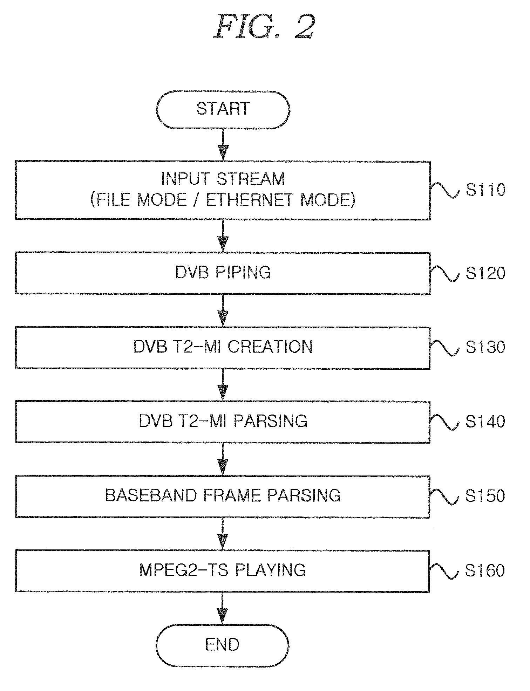

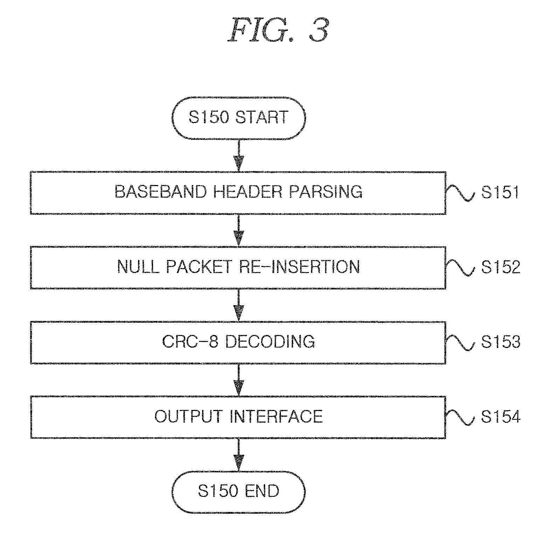

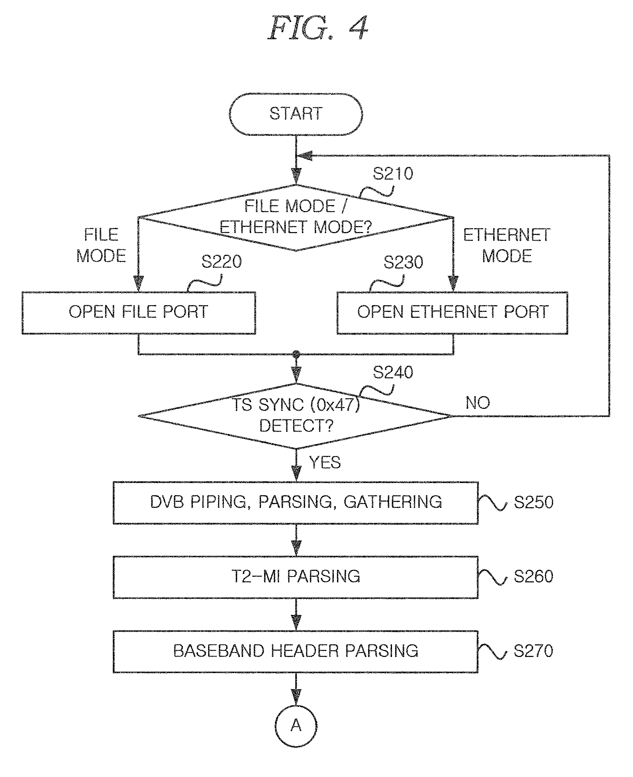

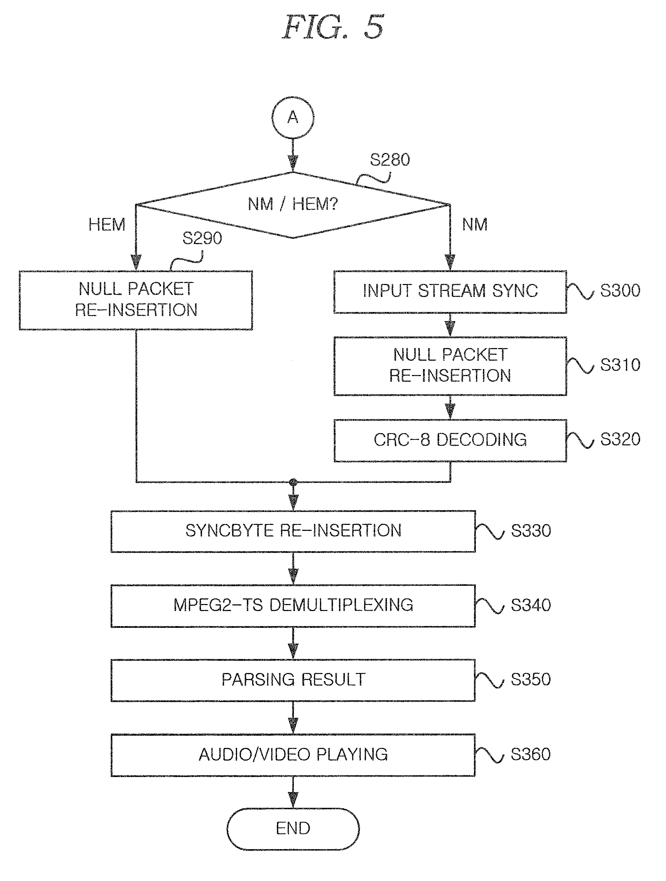

FIG. 1 shows overall structure of DVB-T2 system which may be correspondingly adopted to DVB-S2 and DVB-C2. FIG. 2 is a flowchart which shows data processing routine in a DVB-T2 receiver according to the present invention, and FIG. 3 is a flowchart which generally shows parsing routine of baseband frame according to the present invention. Further, FIGS. 4 and 5 are flowcharts which generally show operations of a DVB-T2 receiver according to the present invention.

DVB-T2 standard aims to improve transfer rate of digital television and flexibility of transfer network, and specifically to effectively provide HDTV service. Referring to FIG. 1, broadcast stream packets are generated in broadcasting station (SS1) and then assembled in a gateway (SS2) so as to distribute contents data. Considering transmitting towers being geometrically separated, the distribution network of Interface B is constituted of Ethernet. After T2 modulator (SS3) performs modulation, broadcast programs are delivered to digital broadcast receivers at each home. The RF channel shown in FIG. 1 may be appropriately replaced with other transmission media.

Then, a digital broadcast receiver receives this broadcast data. After T2 demodulator (SS4) performs demodulation, MPEG decoder (SS5) reconstructs audio/video data so as to represent the broadcast programs to users. The DVB-T2 standard of FIG. 1 adopts PLPs for transmitting audio, video and data so that both or either of MPEG2-TS stream or DVB-GSE IP network may be used for the transmission

Referring to FIG. 2, a digital broadcast receiver is provided with input stream from broadcasting stations (S110). In view of the transmission media, the input stream is identified as File mode stream or Ethernet mode stream in the present invention. File mode stream means that contents data is delivered via transmission media, for example, MPEG2-TS stream which is provided via RF channel. In case of File mode stream, the input stream is gathered by an input buffer into appropriate size so as to be provided to a processing module. Ethernet mode stream means that contents data is delivered by Internet protocol (e.g., UDP packets), for example, DVB-GSE.

Then, DVB-piping is performed for the input stream so as to obtain MPEG2-TS packet data in the unit of 188-byte. Data piping is an encapsulation scheme which provides minimum information in filtering and gathering data out of MPEG2 TS. DVB uses fragmentation of baseband frames (i.e., 64,800 bytes) into MPEG2-TS packets (i.e., 188 bytes) for data transmission. Therefore, DVB-piping in S120 corresponds to re-assembling procedure of MPEG2-TS packets into baseband frames.

Then, DVB T2-MI (DVB-T2 Modulator Interface) is created (S130) and then parsed (S140). By DVB T2-MI creation procedure, T2MI consistent packets (i.e., T2MI packet) are reconstructed. Further, by DVB T2-MI parsing procedure, information for T2MI packets are acquired. Referring to FIG. 1, the data acquired after the DVB T2-MI creation (i.e., T2MI packet) corresponds to Interface B in the transmitting stage (broadcasting station), and therefore is independent of transmission media.

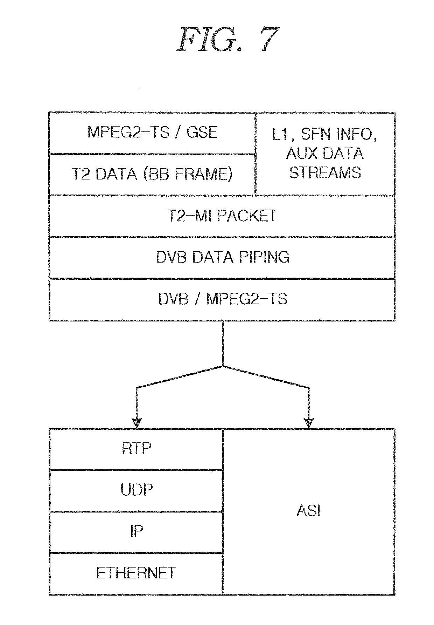

FIG. 7 generally shows DVB-T2 modulator interface (T2-MI). The data (signal) to be transmitted via T2-MI is briefly described. The data sequence of transmission is baseband frame, L1 signal for forming T2 frames in a modulator, IQ vector for auxiliary stream, DVB-T2 timestamp for synchronization; and FEF (Future Extension Frame) data.

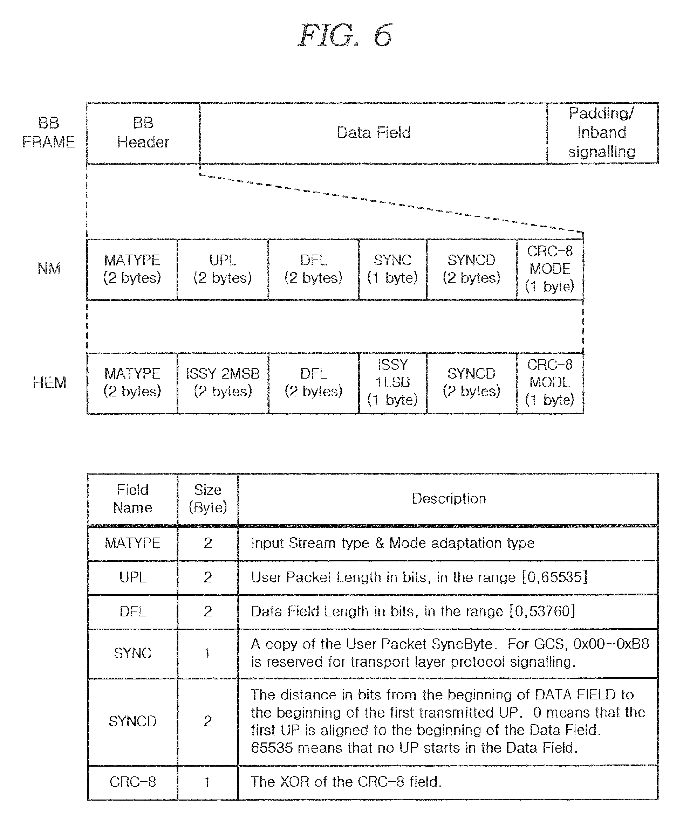

Then, baseband frames are parsed (S150). The baseband frame is a big data structure having payload of 16,200 to 64,800 bytes length, and serves as a container for conveying broadcast contents data. The parsing procedure of the baseband frame is shown in FIG. 3, and the field format of baseband frame header (BB Header) is shown in FIG. 6.

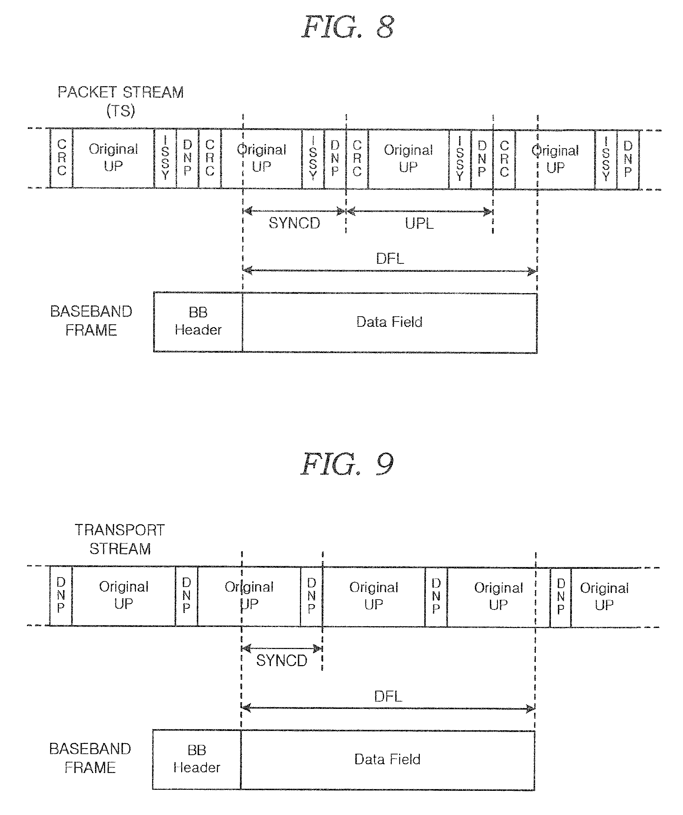

The parsing procedure of baseband frames (S150) is described. First, baseband header is parsed so as to obtain each field value of BB header (S151). Then, a specific field (i.e., DNP field) of baseband frame (FIGS. 8 and 9) is referred. In case that NULL packet deletion (NPD - NULL Packet Deletion) has been adopted in the transmitting stage, NULL packet re-insertion (NPR - NULL Packet Re-insertion) is performed in order to reconstruct original MPEG2-TS (S152). The transmitting stage may perform NPD for enhancing transfer rate with recording the number of deleted NULL packets in the DNP field. Therefore, with referring to the DNP field, the receiver may perform NPR so as to reconstruct original MPEG2-TS if NPD has been performed in the transmitting stage. Then, CRC-8 decoding is performed for detecting possible errors which may incur in baseband frame transmission (S153). In case of no error, the packet stream outputs via output interface (S154).

By completing the parsing procedure of baseband frames as described above, MPEG-encoded broadcast stream data is obtained. Therefore, the MPEG2-TS is decoded so that broadcast programs are represented (S160).

With referring to FIGS. 4 and 5, operations of DVB-T2 receivers according to the present invention are described.

In view of stream input channel of the receivers, the input stream is identified as either File mode or Ethernet mode (S210). Then, corresponding to the identification, either a file port (S220) or an Ethernet port (S230) is opened. Reading a packet stream file may be the opening a file port. User's channel selection is a general way of identifying File mode or Ethernet mode. For example, the File mode is identified for selection of terrestrial channels, whereas the Ethernet mode is identified for selection of DVB-GSE channels. In case of Ethernet mode, network module driver software of the receiver device shall process IP frame data, whose detailed description is omitted in this specification.

Although unseen in FIG. 4, the digital broadcast receiver allocates shared memory from system memory for use in processing broadcast stream which is provided for the input port. The shared memory is allocated when software for playing broadcasting contents launches or broadcast stream starts to be provided. Therefore, dedicated memory is not necessary in the present invention. Further, the shared memory is allocated just as necessary in the present invention. The allocation of shared memory may be performed when the digital broadcast receiver does power-on cold booting, which is preferable for improving system stability as well as functional robustness.

After allocating shared memory, broadcast stream, which is received through the input port (i.e., file port or Ethernet port), is stored in the storage space of the shared memory in order of receiving so as to prepare next stages.

Then, SyncByte (0x47) of MPEG2-TS packets is detected in the input stream (S240). As described above, because DVB-piping transmits baseband frames with fragmenting them into MPEG2-TS packet of 188-byte, receivers must detect SyncByte (0x47) for performing the DVB-piping. Failure in detecting SyncByte means error case.

If SyncByte is detected without error, DVB-piping/parsing and data gathering processes are performed (S250), by which baseband frames are reconstructed with big payload of 16,200 to 64,800 bytes length. Then, T2-MI parsing (S260) and baseband header parsing (S270) are performed.

Then, stream transport mode in the payload of baseband frames is identified as either Normal Mode (NM) or High-Efficiency Mode (HEM) (S280). Referring to FIG. 6, MATYPE field which corresponds to the first 2-byte in the baseband header may be used for the identification.

If the stream transport mode is HEM, the digital broadcast receiver performs NULL packet re-insertion (S290). Otherwise, i.e., if the stream transport mode is NM, the digital broadcast receiver configures synchronization for the MPEG2-TS packet stream (S300), determines by DNP field in the MPEG2-TS packet stream whether NULL packet deletion is adopted for the MPEG2-TS packet stream so as to perform NULL packet re-insertion for the MPEG2-TS packet stream if the NULL packet deletion is adopted (S310), and performs CRC-8 decoding for the MPEG2-TS packet stream (S320). By the process as above, actual contents data which is sent by broadcasting stations is extracted out of MPEG2-TS packet stream for each of NM or HEM. Then, the actual contents data is stored in the shared memory in order of extraction.

Then, SyncByte re-insertion may be performed for the MPEG2-TS packet stream if necessary (S330). The SyncByte re-insertion is needed when transmitting stage (broadcasting station) has formed baseband frames only by 187 bytes with deleting the SyncByte (0x47) when creating the baseband frames.

Then, the digital broadcast receiver demultiplexes MPEG2-TS packet stream (S340) in order to obtain headers, descriptors and system information data (SI data). The digital broadcast receiver parses the headers, descriptors and S1 data (S350), and then plays audio/video so as to represent broadcast programs to users (S360).

There are described above with referring to figures the procedures for DVB-T2 receiving system to process audio/video information of MPEG2-TS contents with memory sharing. The procedure includes steps of identifying NM or HEM by analyzing baseband frame headers of streams which is received in File mode or Ethernet mode, extracting actual contents data out of the streams, and obtaining construction information and header information of the baseband frames.

Referring to FIG. 6, DVB-T technology (i.e., DVB 1G) adopts MPEG2-TS, whereas DVB-T2 technology (i.e., DVB 2G) adopts baseband frame. Therefore, the baseband frame for data packaging specified in DVB-S2 may be used in DVB-T2 without problem, which renders compatibility enhanced. In this case, DVB-T2 baseband frame configures header information according to the selection of NM or HEM.

Further, it is preferable that the shared memory is reused once allocated for storing broadcast stream of baseband frames, MPEG2-TS packet stream and actual contents data in the procedures described above.

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

## Claims

1. A method of processing DVB-T2/S2/C2 piping format broadcast signal with memory sharing for use in a digital broadcast receiver which processes broadcast stream in DVB-T2/S2/C2 piping format, comprising steps of:
(A) identifying File mode or Ethernet mode so as to open an input port correspondingly;
(B) allocating shared memory from system memory for use in processing broadcast stream to be provided through the input port;
(C) receiving broadcast stream through the input port so as to store the broadcast stream in the shared memory in order of receiving;
(D) performing DVB-piping to the broadcast stream so as to gather MPEG2-TS packet stream out of baseband frames;
(E) creating and parsing T2-MI for the MPEG2-TS packet stream;
(F) parsing headers of the baseband frames so as to identify stream transport mode as either Normal Mode (NM) or High-Efficiency Mode (HEM);
(G) extracting actual contents data out of the MPEG2-TS packet stream corresponding to the stream transport mode;
(H) storing the actual contents data in the shared memory in order of extraction; and
(I) representing a broadcast program by MPEG2-TS decoding the actual contents data in the shared memory.

2. The method of processing DVB-T2/S2/C2 piping format broadcast signal with memory sharing of claim 1, wherein the step (B) is performed when the digital broadcast receiver does power-on cold booting, and wherein the shared memory allocated in the step (B) stores the broadcast stream of the baseband frames received in the step (C), the MPEG2-TS packet stream gathered in the step (D), and the actual contents data extracted in the step (G).

3. The method of processing DVB-T2/S2/C2 piping format broadcast signal with memory sharing of claim 2, wherein, in case of Normal Mode for the stream transport mode identified in the step (F), the step (G) comprises steps of:
configuring synchronization for the gathered MPEG2-TS packet stream;
determining by DNP field in the MPEG2-TS packet stream whether NULL packet deletion is adopted for the MPEG2-TS packet stream;
performing NULL packet re-insertion for the MPEG2-TS packet stream if the NULL packet deletion is adopted;
performing CRC-8 decoding for the MPEG2-TS packet stream; and
performing SyncByte re-insertion for the MPEG2-TS packet stream.

4. The method of processing DVB-T2/S2/C2 piping format broadcast signal with memory sharing of claim 3, wherein the step (A) comprises steps of:
identifying File mode if the digital broadcast receiver uses MPEG2-TS broadcast stream channels for broadcast receiving; and
identifying Ethernet mode if the digital broadcast receiver uses DVB-GSE channels for broadcast receiving.

5. Computer-readable recording medium for storing a piping format broadcast signal processing program of executing the method of processing DVB-T2/S2/C2 piping format broadcast signal with memory sharing of any one of claims 1 to 4.
